## Europäisches Patentamt

## European Patent Office

## Office européen des brevets

(19)

(11) Veröffentlichungsnummer: **0 216 069**
**B1**

(12) ## EUROPÄISCHE PATENTSCHRIFT

(45) Veröffentlichungstag der Patentschrift:
**10.01.90**

(51) Int. Cl.⁴: **C02F 1/74**, C02F 3/20

(21) Anmeldenummer: **86110233.3**

(22) Anmeldetag: **24.07.86**

(54) **Verfahren zur Sauerstoffanreicherung von Wasser.**

(30) Priorität: **23.09.85 DE 3533843**

(43) Veröffentlichungstag der Anmeldung:
**01.04.87 Patentblatt 87/14**

(45) Bekanntmachung des Hinweises auf die Patenterteilung:
**10.01.90 Patentblatt 90/2**

(84) Benannte Vertragsstaaten:
**AT BE CH DE FR GB IT LI NL SE**

(56) Entgegenhaltungen:
DE-A- 3 501 175
DE-C- 238 442
DE-C- 531 200
DE-U- 8 521 014
GB-A- 1 580 140
US-A- 1 853 045
US-A- 2 009 230
US-A- 4 049 552
US-A- 4 103 202
US-A- 4 382 044

(73) Patentinhaber: **Zantinge, Gerrit, Canadalaan 2, NL-7316 BX Apeldoorn(NL)**

(72) Erfinder: **Zantinge, Gerrit, Canadalaan 2, NL-7316 BX Apeldoorn(NL)**

(74) Vertreter: **Habbel, Hans-Georg, Dipl.-Ing., Postfach 3429 Am Kanonengraben 11, D-4400 Münster(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf ein Verfahren zur Sauerstoffanreicherung von Wasser gemäß dem Oberbegriff des Hauptanspruches und auf eine Vorrichtung zur Durchführung dieses Verfahrens.

In vielen landwirtschftlichen und gärtnerischen Betrieben sowie in Fischzuchtanlagen wird das für den Betrieb der Einrichtungen erforderliche Wasser als Grundwasser dem Boden entnommen und den Pflanzen oder den Tieren zugeführt. Die Erfahrungen haben gezeigt, daß dieses Wasser relativ sauerstoffarm ist und es sind bereits verschiedene Vorschläge bekannt, um generell Wasser mit Sauerstoff anzureichern. So ist beispielsweise aus US-A 1 853 045 ein Verfahren gemäß dem Oberbegriff des Hauptanspruches und eine Vorrichtung zur Durchführung dieses Verfahrens, und aus der DE-A 27 05 243 oder FR-A 23 90 989 bekannt, in eine Wasserzuleitung eine Saugdüse einzusetzen, deren Ansaugstutzen als Luftansaugstutzen ausgebildet ist, so daß bei Betrieb der Wasserzuleitung aus der Umgebung Luft angesaugt und dem Wasser beigemischt wird.

Diese bekannten Verfahrensweisen führen aber nicht zu einer hohen und damit ausreichenden Sauerstoffanreicherung.

Andererseits ist es bekannt, daß geologisch aktiver Sauerstoff zu einem Wohlbefinden des Menschen führt und für verschiedene Erkrankungen als heilsam erwiesen ist. Solcher biologisch aktiver Sauerstoff wird in Luftkurorten, am Meer und im Gebirge gefunden, wo er sich unter normalen Wetterbedingungen bildet.

Der Erfindung liegt die Aufgabe zugrunde, eine hohe Sauerstoffanreicherung des Wassers mit einfachsten Mitteln wirksamer herbeizuführen.

Diese der Erfindung zugrundeliegende Aufgabe wird durch das Verfahren gemäß dem Hauptanspruch und der Vorrichtung gemäß Anspruch 2 gelöst.

Vorteilhafte Ausgestaltungen der Erfindung sind in den Unteransprüchen erläutert.

Mit anderen Worten ausgedrückt:
Gemäß der Erfindung wird die im Bereich einer Saugdüse von der Saugdüse angesaugte Luft durch das Wirkungsfeld eines Ionengenerators geführt, so daß die von der Saugdüse angesaugte Luft einen hohen Anteil negativer Ionen aufweist. Durch diese ionisierte Luft erfolgt eine außerordentlich hohe Sauerstoffanreicherung des Wassers im Bereich der Saugdüse, wobei dieses Wasser dann noch nicht abgegeben wird, sondern über eine Rohrschlange zu der Wasserabgabestelle geführt wird, so daß die intensive Mischung zwischen ionisierter Luft und Wasser einen langen Zeitraum, nämlich über den gesamten Weg der Rohrschlange, aufrechterhalten bleibt, so daß dadurch die erforderliche Eintragung des Sauerstoffs in das Wasser erfolgt.

Durch das erfindungsgemäße Verfahren und die erfindungsgemäße Vorrichtung wird außer dem angestrebten hohen Sauerstoffanteil des Wassers, der für Pflanzenzuchtbetriebe und Tierzuchtbetriebe von Bedeutung ist, gleichzeitig erreicht, daß der hohe Sauerstoffanteil zu einer Bakterienvernichtung innerhalb des Wassers führt oder das Wasser gegen Bakterien unempfindlicher macht.

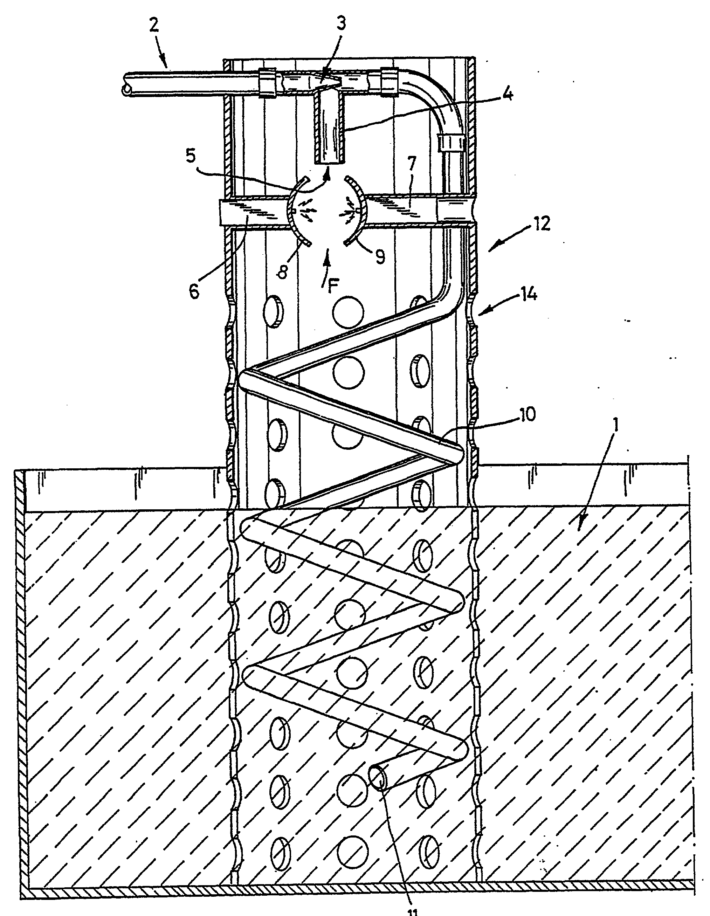

Ein Ausführungsbeispiel der Erfindung wird nachfolgend anhand der Zeichnung erläutert.

In der Zeichnung ist mit 1 ein Wasserbecken bezeichnet, dessen Wasser ergänzt werden muß oder das als Vorratsbecken dient, wobei das in diese Wasserbecken 1 einzuführende Wasser einen hohen Sauerstoffanteil aufweisen soll.

Die Zuführung des Wassers erfolgt über eine Wasserzuleitung 2, in die eine sogenannte Saugdüse 3 eingeschaltet ist. Bei 4 ist der Ansaugstutzen der Saugdüse 3 dargestellt und die Lufteintrittsöffnung 5 dieses Luftansaugstutzens mündet frei oberhalb eines Ionengenerators 6. Bei dem dargestellten Ausführungsbeispiel sind zwei Ionengeneratoren vorgesehen, nämlich 6 und 7, die eine konkav gewölbte Frontplatte 8 bzw. 9 aufweisen, in deren Tiefsten die Emissionsnadeln der Ionengeneratoren 6 und 7 münden. Die beiden Frontplatten 8 und 9 stehen in einem solchen Abstand voneinander, daß die von der Lufteintrittsöffnung 5 angesaugte Luft durch den Spalt zwischen den beiden Frontplatten 8 und 9 geführt wird, wie dies durch den Pfeil F in der Zeichnung angedeutet ist.

An die Saugdüse 3 schließt sich eine Rohrschlange 10 an, die im Wasserbecken 1 mündet und die eigentliche Wasserabgabestelle 11 bildet. Die vorbeschriebene Einrichtung, bestehend aus der Saugdüse, 3 den Ionengeneratoren 6 und 7 und der Rohrschlange 10, ist in einem Zylinderstutzen 12 angeordnet, der Durchtrittsöffnungen 14 aufweist, die im oberen Bereich des Zylinderstutzens 12 dem Zutritt der Luft und im unteren Bereich dem Austausch des Wassers dienen.

Bei Inbetriebnahme der Ionengeneratoren 6 und 7 erzeugen diese im Bereich der Frontplatte 8 und 9 eine Vielzahl negativ geladener Ionen, die sich mit Sauerstoff anreichern und bei Inbetriebnahme der Wasserzuleitung 2 saugt die Saugdüse 3 über den Ansaugstutzen 4 Frischluft an, wobei diese Frischluft einen hohen Anteil negativer Ionen, d. h. einen hohen Sauerstoffanteil aufweist. Diese sauerstoffreiche Luft wird nunmehr in die Rohrschlange 10 eingetragen und auf einem relativ langen Weg bis zur Wasserabgabestelle 11 geführt, so daß ausreichend Zeit vorhanden ist, daß das Wasser den Sauerstoff aufnehmen kann.

Durch die Anordnung der Ionengeneratoren 6 und 7 vor dem Ansaugstutzen 4 wird aber nicht nur die gewünschte Sauerstoffanreicherung des Wassers erreicht, gleichzeitig wird eine Bakterientötung bewirkt, die sowohl in der Luft wie auch im Wasser wirksam ist, so daß das eingetragene Wasser einen hohen Sauerstoffanteil und einen hohen Reinheitsgrad aufweist.

Zusammenfassend ist also festzustellen, daß durch die erfindungsgemäße Verfahrensweise und durch die erfindungsgemäße Vorrichtung eine Anreicherung des Wassers mit biologisch aktivem Sauerstoff erfolgt. Hierdurch wird das reinigende Vermögen verbessert, d. h. die Wassermoleküle sind imstande, Schmutzpartikelchen zu polarisieren und Bakterien abzutöten. Sauerstoffarmes Grundwasser wird in Wasser umgewandelt, das einen hohen Anteil biologisch aktiven Sauerstoffes aufweist, so daß die damit versorgten Organismen an Qualität, Widerstand, Wachstum und Fruchtbarkeit zunehmen. Der Spannungszustand des Gewebes wird erhöht (in der Medizin als Turgor bekannt), so daß ein besserer Zellstoffwechsel stattfindet, was zur erhöhten Aufnahmebereitschaft von Magnesium und Eisen führt.

Versuche in einer Glasgärtnerei ergaben, daß durch die Zufuhr des mit biologisch aktivem Sauerstoff angereicherten Wasser kräftigere, gesundere Pflanzen erzielbar sind, daß Schimmelkrankheiten und bakterologische Beläge nicht mehr auftreten und daß schließlich auch die schädlichen Insekten erheblich zurückgingen. Darüberhinaus wiesen die erzielten Früchte eine höhere Haltbarkeit auf.

## Patentansprüche

1. Verfahren zur Sauerstoffanreicherung von Wasser, bei welchem das mit Sauerstoff anzureichernde Wasser einer Saugdüse zugeführt, im Ansaugbereich der Saugdüse Luft angesaugt und das Wasser-Luftgemisch anschließend über eine einen langen Weg schaffende Rohrschlange zur Wasserabgabestelle geführt wird, dadurch gekennzeichnet, daß die anzusaugende Luft vorher durch das Wirkungsfeld eines Ionengenerators geführt wird.

2. Vorrichtung zur Sauerstoffanreicherung von Wasser mit einer in einer Wasserzuleitung (2) eingesetzten Saugdüse (3), deren Ansaugstutzen (4) als Luftansaugstutzen ausgebildet ist und einer sich an die Saugdüse anschließenden Rohrschlange (10) zur Führung des Luft-Wasser-Gemisches, dadurch gekennzeichnet, daß die Lufteintrittsöffnung (5) des Ansaugstutzens (4) im Bereich wenigstens eines Ionengenerators (6, 7) mündet.

3. Vorrichtung nach Anspruch 2, dadurch gekennzeichnet, daß zwei Ionengeneratoren (6, 7) einander gegenüberliegend angeordnet sind und durch den so gebildeten Zwischenraum auf der Abgabeseite der Ionengeneratoren die vom Ansaugstutzen (4) angesaugte Luft fließt.

4. Vorrichtung nach Anspruch 2 und 3, dadurch gekennzeichnet, daß die Emissionsnadeln der Ionengeneratoren (6, 7) in einer konkav gewölten Frontplatte (8, 9) im Bereich des Wölbungstiefsten angeordnet sind.

5. Vorrichtung nach Anspruch 2 bis 4, dadurch gekennzeichnet, daß die Wasserzuleitung (2), die Saugdüse (3), die Ionengeneratoren (6, 7) und die Rohrschlange (10) in einem transportablen luft- und wasserdurchlässigen Zylinderstutzen (12) angeordnet sind.

## Claims

1. Process for water oxygenation, wherein the water that is to be oxygenated is fed to a suction nozzle, air is taken in in the intake region of the suction nozzle, and the mixture of water and air is subsequently passed to the water delivery point by way of a coiled pipe providing a long path, characterised in that the air that is to be taken in is first passed through the field of action of an ion generator.

2. Apparatus for water oxygenation having a suction nozzle (3) inserted in a water supply pipe (2), the intake connection (4) of said nozzle being an air intake connection, and having a coiled pipe (10) which follows on from the suction nozzle to convey the air-and-water mixture, characterised in that the air inlet port (5) of the intake connection (4) opens out in the region of at least one ion generator (6, 7).

3. Apparatus according to claim 2, characterised in that two ion generators (6, 7) are arranged opposite one another and the air drawn in by the intake connection (4) flows through the gap thus formed on the delivery side of the ion generators.

4. Apparatus according to claims 2 and 3, characterised in that the emission needles of the ion generators (6, 7) are disposed in a concavely curved front panel (8, 9) in the region of the lowest point of the camber.

5. Apparatus according to claims 2 to 4, characterised in that the water supply pipe (2), the suction nozzle (3), the ion generators (6, 7) and the coiled pipe (10) are disposed in a transportable air-permeable and water-permeable cylinder connection (12).

## Revendications

1. Procédé pour l'enrichissement de l'eau en oxygène, suivant lequel l'eau à enrichir en oxygène est amenée à une tuyère d'aspiration, de l'air est aspiré dans la zone d'aspiration de la tuyère d'aspiration, et le mélange eau-air est immédiatement après dirigé sur le lieu de distribution de l'eau par l'intermédiaire d'un serpentin procurant un long trajet, caractérisé par le fait que l'air à aspirer est au préalable dirigé à travers le champ d'action d'un générateur d'ions.

2. Dispositif pour l'enrichissement de l'eau en oxygène, comportant une tuyère d'aspiration (3) qui est placée dans une conduite d'amenée d'eau (2) et dont la tubulure d'asiration est réalisée sous la forme d'une tubulure d'aspiration d'air, et un serpentin (10) se raccordant à la tuyère d'aspiration pour conduire le mélange air-eau, caractérisé par le fait que l'ouverture d'admission d'air (5) de la tubulure d'aspiration (4) débouche dans la zone d'au moins un générateur d'ions (6, 7).

3. Dispositif selon la revendication 2, caractérisé par le fait que deux générateurs d'ions (6, 7) sont disposés en face l'un de l'autre et que l'air aspiré par la tubulure d'aspiration (4) traverse l'espace intermédiaire ainsi formé du côté de distribution des générateurs d'ions.

4. Dispositif selon l'une des revendications 2 et 3, caractérisé par le fait que les aiguilles d'émission des générateurs d'ions (6, 7) sont disposées chacune dans une platine avant (8, 9) cintrée concave, au plus profond de la concavité.

5. Dispositif selon l'une des revendications 2 à 4, caractérisé par le fait que la conduite d'amenée d'eau (2), la tuyère d'aspiration (3), les générateurs d'ions (6, 7) et le serpentin (10) sont disposés dans un manchon cylindrique (12) transportable, perméable à l'air et à l'eau.